# EUROPEAN PATENT APPLICATION

(11) **EP 4 575 886 A1**
(43) Date of publication of application: **25.06.2025**
(21) Application number: 24219700.2
(22) Date of filing: 13.12.2024
(51) Int. Cl.: G06F 40/30

(54) **SYSTEMS AND METHODS FOR IDEATION OF RESEARCH PROPOSAL USING LARGE LANGUAGE MODELS AGENT-BASED ARCHITECTURE**

(30) Priority: 20.12.2023 IN 202321087441
(71) Applicant: Tata Consultancy Services Limited, Maharashtra (IN)
(72) Inventor: NIGAM, Harshit, 110001 New Delhi, Delhi (IN); PATWARDHAN, Manasi Samarth, 411057 Pune, Maharashtra (IN); VIG, Lovekesh, 110001 New Delhi, Delhi (IN); SHROFF, Gautam, 122004 Gurgaon, Haryana (IN)
(74) Representative: Goddar, Heinz J.

(57) **Abstract**

Ideation phase of research life cycle is challenging for researchers. The present disclosure provides a system and method for ideation of research proposal using a large language models (LLM) agent-based architecture. Ideation process is emulated using the LLM agent-based architecture having a colleague persona and mentor personas to execute a motivation validation and method synthesis. The motivation validation and the method synthesis engage users in an interactive manner to develop a research proposal document. The research proposal document comprises a validated motivation and a set of plausible solutions addressing a research problem based on a plurality of tasks performed by agents of the LLM agent-based architecture. The present disclosure alleviates hallucinations of LLMs, addresses unanswerability, and ensure relevant outcomes using two-stage aspect based retrieval where first stage introduces higher recall reducing False Negatives and correcting False Positives and second stage provides more precise fine-grained aspect based retrieval.

## Description

### CROSS-REFERENCE TO RELATED APPLICATIONS AND PRIORITY

The present application claims priority to Indian application no. 202321087441, filed on 20 December 2023.

### TECHNICAL FIELD

The disclosure herein generally relates to the field of ideation of research proposal, and, more particularly, to systems and methods for ideation of research proposal using large language models agent-based architecture.

### BACKGROUND

With fast-paced research happening in every field, there is an exponential growth in scientific articles and research papers on multiple websites. It is difficult for an individual researcher or a small research group to keep track of this information explosion and constant growth taking place in her field of interest. It has become a task within itself to be consistently appraised with the literature to ensure novelty at various stages of the research life cycle, starting from ideation to experimentation and analysis of results. This calls for a need of a tool to facilitate researchers to accelerate the research life cycle, by augmenting with appropriate inputs at various stages. Several tools have been proposed for assisting researchers during various stages of research life-cycle. However, these tools primarily concentrate on tasks such as retrieving and recommending relevant literature, reviewing and critiquing draft, and writing of research manuscripts. There exists a significant gap in availability of tools specifically designed to assist researchers during a challenging ideation phase of the research life-cycle.

### SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising receiving, via an input/output interface, a research proposal document as an input from a user, wherein the research proposal document comprises text depicting a high-level description of a research problem and a motivation behind the research problem; inputting, via one or more hardware processors, the research proposal document as a query to a large language models (LLM) agent-based architecture, wherein the LLM agent-based architecture comprises a first agent and a second agent interacting with each other and the user, a first data repository, and a second data repository; enabling, via the one or more hardware processors, the first agent to perform a first of type of tasks and the second agent to perform a second type of tasks on the query using the LLM agent-based architecture; and obtaining, via the one or more hardware processors, a modified research proposal document with a validated motivation and a set of plausible solutions addressing the research problem based on the first type of tasks performed by the first agent and the second type of tasks performed by the second agent, wherein the validated motivation is iteratively updated based on a plurality of gaps identified in a plurality of prior research documents addressing the motivation behind the research problem.

In another aspect, a system is provided. The system comprising a memory storing instructions; one or more communication interfaces; and one or more hardware processors coupled to the memory via the one or more communication interfaces, wherein the one or more hardware processors are configured by the instructions to: receive a research proposal document as an input from a user, wherein the research proposal document comprises text depicting a high-level description of a research problem and a motivation behind the research problem; input the research proposal document as a query to a large language models (LLM) agent-based architecture, wherein the LLM agent-based architecture comprises a first agent and a second agent interacting with each other and the user, a first data repository, and a second data repository; enable the first agent to perform a first of type of tasks and the second agent to perform a second type of tasks on the query using the LLM agent-based architecture; and obtain a modified research proposal document with a validated motivation and a set of plausible solutions addressing the research problem based on the first type of tasks performed by the first agent and the second type of tasks performed by the second agent, wherein the validated motivation is iteratively updated based on a plurality of gaps identified in a plurality of prior research documents addressing the motivation behind the research problem.

In yet another aspect, a non-transitory computer readable medium is provided. The non-transitory computer readable medium are configured by instructions for receiving a research proposal document as an input from a user, wherein the research proposal document comprises text depicting a high-level description of a research problem and a motivation behind the research problem; inputting the research proposal document as a query to a large language models (LLM) agent-based architecture, wherein the LLM agent-based architecture comprises a first agent and a second agent interacting with each other and the user, a first data repository, and a second data repository; enabling the first agent to perform a first of type of tasks and the second agent to perform a second type of tasks on the query using the LLM agent-based architecture; and obtaining, a modified research proposal document with a validated motivation and a set of plausible solutions addressing the research problem based on the first type of tasks performed by the first agent and the second type of tasks performed by the second agent, wherein the validated motivation is iteratively updated based on a plurality of gaps identified in a plurality of prior research documents addressing the motivation behind the research problem.

In accordance with an embodiment of the present disclosure, the first type of tasks performed by the first agent comprises at least one of: (i) extracting relevant information from the research proposal document, (ii) generating a plurality of relevant questions from the relevant information, (iii) retrieving a plurality of top-K research documents from the first repository having a similarity to the research proposal document using a vector representation of the research proposal document, and (iv) obtaining a plurality of paragraph chunks of each of the plurality of top-K research documents from the second repository that are created using a parser and indexer functionality of the LLM agent-based architecture.

In accordance with an embodiment of the present disclosure, the second type of tasks performed by the second agent comprises at least one of (i) identifying a plurality of gaps in the plurality of prior research documents addressing the motivation behind the research problem, (ii) identifying the set of plausible solutions addressing the research problem, and (iii) re-writing the research proposal document based on the plurality of gaps identified in a plurality of prior research documents and the set of plausible solutions addressing the research problem.

In accordance with an embodiment of the present disclosure, the set of plausible solutions addressing the research problem is identified by: decomposing the research problem defined in the research proposal document into a plurality of sub-problems; identifying a subset of sub-problems from the plurality of sub-problems such that a set of hallucinated problems are eliminated; retrieving a plurality of top-K research documents from the first repository having a similarity to each of the subset of sub-problems based on a vector representation of the subset of sub-problems; determining, a set of plausible solutions for addressing each subproblem from the subset of sub-problems by extracting one or more relevant texts from each of the plurality of top-K research documents stored and retrieved from the second repository; iteratively performing step of retrieving the plurality of top-K research documents and identifying the set of plausible solutions to generate a consolidated list of a subset of similar sub-problems and corresponding set of plausible solutions; and identifying the set of plausible solutions addressing the research problem using the consolidated list of the subset of similar sub-problems and the corresponding set of plausible solutions.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for ideation of research proposal using large language models agent-based architecture, according to some embodiments of the present disclosure.
FIG. 2 illustrate an exemplary flow diagram illustrating a method for ideation of research proposal using large language models agent-based architecture, using the system of FIG. 1 and FIG. 2, in accordance with some embodiments of the present disclosure.
FIG. 3 shows a web based input/output (I/O) interface of the system of FIG. 1 for ideation of research proposal using large language models agent-based architecture, in accordance with some embodiments of the present disclosure
FIG. 4 illustrates a high-level functional architectural overview of the system of FIG. 1, in accordance with some embodiments of the present disclosure.
FIG. 5 illustrates an exemplary flow diagram illustrating a motivation validation workflow for ideation of research proposal using large language models agent-based architecture, in accordance with some embodiments of the present disclosure.
FIG. 6 illustrates an exemplary flow diagram illustrating a method synthesis workflow for ideation of research proposal using large language models agent-based architecture, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

There is a need of systems specifically designed to assist researchers during challenging ideation phase of the research life-cycle. The ideation phase of the research life-cycle involves: (i) analyzing exiting literature to critically evaluate a motivation behind a research problem being addressed by a researcher to ensure that mentioned research gap(s) exist(s), (ii) reformulating the research problem and objectives based on a validation stage output and re-identification of research gaps, (iii) identifying analogous research problems or sub-problems addressed in the literature and utilizing their solutions available in the literature, to derive a set-of approaches or synthesizing a set of plausible methods as a solution to the research problem, and (iv) designing experimentation strategy for a given research problem and selected methodology.

Embodiment of the present disclosure provides a system and method for ideation of research proposal using large language models agent-based architecture that help in accelerating research life cycle. By exploiting the reasoning and domain specific skills of large language model (LLM_ based agent, the system of the present disclosure automates research activities, thus alleviating burden of researchers. The method of the present disclosure assists the researcher by providing relevant inputs in an interactive fashion, at various stages. This helps in expediting the process of meeting research objectives. The system of the present disclosure facilitates ideation of a research problem, specified by the researcher. The researcher is required to provide a short paragraph along with title of a research problem, and a description of a motivation to solve the problem. With LLM powered agents, the system of the present disclosure helps the researcher in an interactive fashion to develop the research proposal documents consisting of a validated motivation, a well-defined research problem focusing on research gaps in literature, a solution selected from a set-of plausible synthesized methods, and possible set-of experiments to be conducted to evaluate the selected solution for the research problem. Embodiment of the present disclosure mimics the ideation process of the research life-cycle followed by researchers, using the LLM agents.

In the present disclosure, the system accelerates different phases of the research life cycle which is specially designed to aid the ideation process. The system of the present disclosure guides researchers through formulation of a comprehensive research proposal document, encompassing a research problem. A motivation in the research proposal document is validated by identifying gaps in existing literature and suggesting a plausible list of techniques to solve the research problem. In the present disclosure, reasoning and domain-specific skills of Large Language Models (LLMs) are leveraged to create an agent-based architecture incorporating colleague and mentor personas for LLMs. The LLM agents emulate the ideation process undertaken by researchers, engaging researchers in an interactive fashion to aid in the development of the research proposal. The present disclosure addresses challenges inherent in LLMs, such as hallucinations, implements a two-stage aspect-based retrieval to manage precision-recall trade-offs, and tackles issues of unanswerability. To showcase the ideation capabilities of the system of the present disclosure, execution of a motivation validation and a method synthesis workflow on the research proposal documents is demonstrated. The research proposal documents is received from a machine learning and a natural language processing domain, given as an input by 3 distinct researchers from distinct domain such as computer science, material science and life sciences. Observations and evaluations provided by the researchers illustrate the efficacy of the system of the present disclosure in terms of assisting researchers with appropriate inputs at distinct stages and thus leading to improved time efficiency.

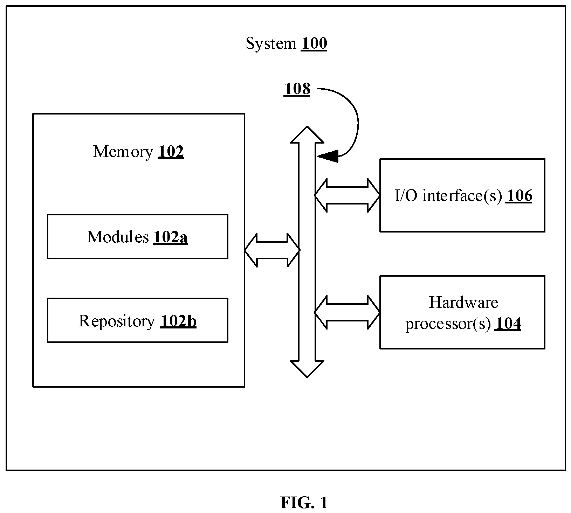

Referring now to the drawings, and more particularly to FIGS. 1 through 6, where similar reference characters denote corresponding features consistently throughout the figures, there are shown preferred embodiments and these embodiments are described in the context of the following exemplary system and/or method.

FIG. 1 illustrates an exemplary system for ideation of research proposal using large language models agent-based architecture according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions processors and hardware processors may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The repository 102b further comprises a first repository and a second repository. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

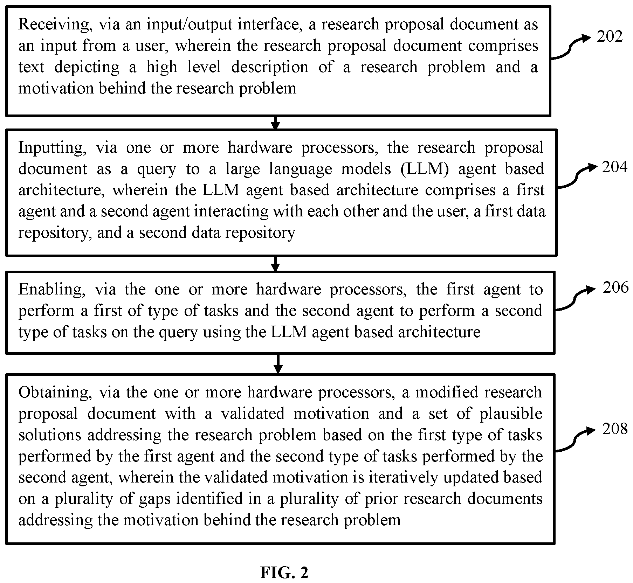

Embodiments of the present disclosure provide systems and methods for ideation of research proposal using large language models agent-based architecture. FIG. 2 illustrate an exemplary flow diagram illustrating a method for ideation of research proposal using large language models agent-based architecture, using the system of FIG. 1, in accordance with some embodiments of the present disclosure.

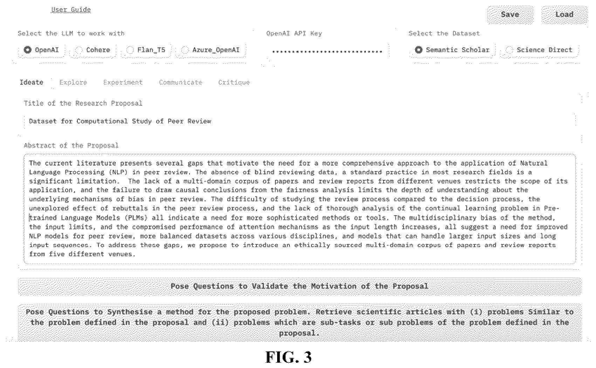

Referring to FIG. 2, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, high-level diagram of FIG. 3, and one or more examples. Although steps of the method 200 including process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, the input/output (I/O) interface(s) 106 are configured to receive a research proposal document as an input from a user. The research proposal document comprises text depicting a high-level description of a research problem and a motivation behind the research problem. The user may include but is not limited to a researcher, any other person, associated with the ideation of research proposal. Further, inputs may be received from an external system also. FIG. 3 shows a web based input/output (I/O) interface of the system of FIG. 1 for ideation of research proposal using large language models agent-based architecture, in accordance with some embodiments of the present disclosure. In the context of the present disclosure, the system for ideation of research proposal using large language models agent-based architecture helps in accelerating the research life cycle.

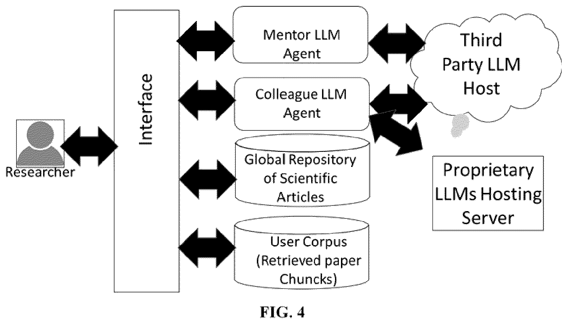

Further, at step 204 of the present disclosure, the one or more hardware processors 104 are configured to input the research proposal document as a query to a large language models (LLM) agent-based architecture. The LLM agent-based architecture comprises a first agent and a second agent interacting with each other and the user, a first data repository, and a second data repository. FIG. 4 illustrates a high-level functional architectural overview of the system of FIG. 1, in accordance with some embodiments of the present disclosure. As shown in FIG. 4, the web-based interface is provided for the users such as researchers to interact. In the LLM agent-based architecture, agents of two distinct types of profiles or personas are provided. The first agent represents a 'colleague' persona and performs tasks of a first type (e.g., also referred to as first type of tasks, or tasks that are less complex in nature). The second agent represents a 'mentor' persona and performs tasks of a second type (e.g., also referred to as second type of tasks, or tasks that are complex or more complex in nature). The LLM agent-based architecture is flexible such that the LLM agents including the first agent and the second agent can interact with (i) LLMs using API calls or (ii) open-source LLMs which reside on an internal hosting server. As shown in FIG. 4, the first repository is a global repository which is a vector store of domain specific scientific articles which are indexed by specter embeddings produced using the research proposal document. The second repository is a user specific corpus which comprises paragraph chunks of all retrieved papers that are relevant to a current research proposal document the researcher is working on. The paragraph chunks of the retrieved papers are created with a parser treating paragraphs as semantic segments. If a paragraph does not fit into maximum token length of LLM agents, while chunking it is further split to fit into the maximum token length. The paragraph chunks of the retrieved papers are further converted to vector embeddings and indexed for efficient retrieval based on semantic similarity with the query. This user corpus acts as a shared 'memory' for the LLM agents.

At step 206 of the present disclosure, the one or more hardware processors 104 are configured to enable the first agent to perform the first type of tasks and the second agent to perform the second type of tasks on the query using the LLM agent-based architecture. The first type of tasks performed by the first agent comprises at least one of: (i) extracting relevant information from the research proposal document, (ii) generating a plurality of relevant questions from the relevant information, (iii) retrieving a plurality of top-K research documents from the first repository having a similarity to the research proposal document using a vector representation of the research proposal document, and (iv) obtaining a plurality of paragraph chunks of each of the plurality of top-K research documents research documents from the second repository that are created using a parser and indexer functionality of the LLM agent-based architecture. The second type of tasks performed by the second agent comprises at least one of (i) identifying a plurality of gaps in the plurality of prior research documents addressing the motivation behind the research problem, (ii) identifying the set of plausible solutions addressing the research problem, and (iii) re-writing the research proposal document based on the plurality of gaps identified in a plurality of prior research documents and the set of plausible solutions addressing the research problem.

In an embodiment, at step 208 of the present disclosure, the one or more hardware processors 104 are configured to obtain a modified research proposal document with a validated motivation and a set of plausible solutions addressing the research problem based on the first type of tasks performed by the first agent and the second type of tasks performed by the second agent. The validated motivation is iteratively updated based on a plurality of gaps identified in a plurality of prior research documents addressing the motivation behind the research problem. In an embodiment, the set of plausible solutions addressing the research problem is identified by first decomposing the research problem defined in the research proposal document into a plurality of sub-problems and identifying a subset of sub-problems from the plurality of sub-problems such that a set of hallucinated problems are eliminated. Further, a plurality of top-K research documents are retrieved from the first repository having a similarity to each of the subset of sub-problems based on a vector representation of the subset of sub-problems. Furthermore, a set of plausible solutions for addressing each subproblem from the subset of sub-problems are determined by extracting one or more relevant texts from each of the plurality of top-K research documents stored and retrieved from the second repository. The step of retrieving the plurality of top-K research documents and identifying the set of plausible solutions is iteratively performed to generate a consolidated list of a subset of similar sub-problems and corresponding set of plausible solutions. Further, the set of plausible solutions addressing the research problem is identified using the consolidated list of the subset of similar sub-problems and the corresponding set of plausible solutions.

In an embodiment, the step 208 is better understood by way of the following description provided as exemplary explanation.

The ideation process of research proposal involves interaction between a researcher and the first agent and second agent of the LLM agent-based architecture, where the first agent and second agent perform actions based on a feedback received by the researcher or another agent. The ideation process takes a research proposal document as an input from a researcher with a research problem description specified at a high-level along with the motivation behind the research problem. The output of the ideation process is the modified research proposal document with (i) the validated motivation or updated research problem by identifying gaps in the plurality of prior works addressing the motivation, and (ii) the set of plausible solutions to address the research problem. The ideation process is split into two workflows: (i) motivation validation workflow and (ii) method synthesis workflow.

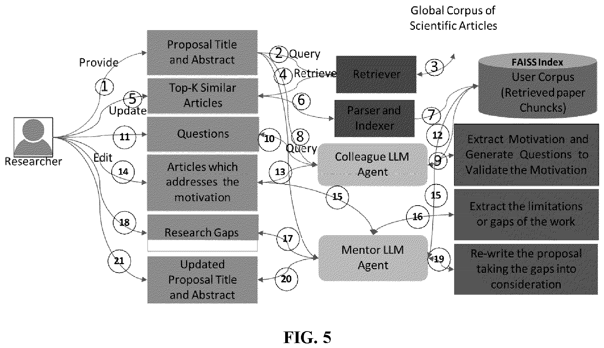

FIG. 5 illustrates an exemplary flow diagram illustrating the motivation validation workflow for ideation of research proposal using large language models agent-based architecture, in accordance with some embodiments of the present disclosure. As shown in FIG. 5, at first step, the researcher provides a title and abstract of the research proposal document elaborating the motivation behind the research proposal and a high-level description of the research problem statement that the researcher wishes to solve. Further, a retriever functionality of the system 100 uses this title and abstract of the proposal as a query and gets a vector representation of the same. This vector representation is used to retrieve top-K articles similar to the contents of the research proposal document from the first repository which is the global corpus of scientific articles. The top-K articles along with a description of relevance of each article to the research proposal document is shown to the researcher. These articles are editable by the researcher who can delete articles they find irrelevant or by adding relevant articles. The parser and indexer functionality of the LLM agent-based architecture chunks the finalized set-of papers in paragraphs (i.e., semantic segments). The paragraph chunks of the finalized set-of papers are stored in the second repository which is the user corpus with appropriate indexing mechanisms. The first agent (also interchangeably referred as colleague agent throughout the description) fetches the title and abstract of the research proposal document provided by the researcher. The first agent extracts the motivation out of the research proposal document (Prompt 1) and generates a list of questions to be posed on shortlisted scientific articles to validate the motivation of the proposal (Prompt 2). Table 1 and Table 2 below show prompts for motivation extraction and motivation question generation respectively.

**Table 1**

| Motivation Extraction Prompt |
|---|
| System Message: |
| You are a researcher and trying to understand the following research proposal written by another researcher: { research proposal document} |
| Human Message: |
| Describe in a bulleted list what is not addressed in the current literature which serves as the Motivation behind solving the above research problem proposed in the Proposal. Answer without a heading line and just the bullet points. Each bullet should mention one gap in the literature as a bullet point and not a sentence. |

**Table 2**

| Motivation Question Generation Prompt |
|---|
| System Message: |
| You are a researcher and trying to understand the following research proposal document written by another researcher: { research proposal document} |
| Human Message: |
| Describe in a bulleted list what is not addressed in the current literature which serves as the Motivation behind solving the above research problem proposed in the research proposal document. Answer without a heading line and just the bullet points. Each bullet should mention one gap in the literature as a bullet point and not a sentence. |
| AI Message: |
| {motivation} |
| Human Message: |
| Convert each of the above bullets into a binary question. The question should begin with 'Is the research paper'. |

The generated questions are binary and formulated such that if, for a scientific article, the answer to the question is 'yes', then the article is already addressing the motivation of the research proposal document mentioned by that question. For example, if the researcher proposes to develop a technique to solve a novel aspect of a problem, a question generated would be of the form *'Does the research paper address that specific aspect of the problem?'.* If this question is answered as *'yes'* by a scientific article then it implies that the article addresses that aspect of the problem and hence the motivation behind the study is weak or invalidated. The generated set-of questions are shown to the researcher. The researcher is enabled by the system to edit the generated questions by updating format of the questions, deleting questions that the researcher deems irrelevant or adding missing relevant questions. For each question and a corresponding retrieved paper stored in the user corpus, the colleague agent retrieves a plurality of paragraph chunks of the paper relevant to that question and tries to answer that question using retrieval augmented generation (RAG). Table 3 below shows a prompt for ask question and answering that question using retrieval augmented generation (RAG).

**Table 3**

| Ask Motivation Question for Validation Prompt |
|---|
| System Message: |
| You are a researcher. You have been given a context, which are paragraphs from a research paper. You have been given a question. Answer the given Question in 'Yes' OR 'No' OR 'Unanswerable'. Answer solely based on the provided context of the research paper. If the question cannot be answered with the facts mentioned in the available context or there is any ambiguity in answering the question answer as 'Unanswerable'. |
| Answer as 'Yes' only when the question can be very clearly answered considering the facts in the research paper provided in the context. Do not repeat the question as the part of the answer. |
| Provide a concise explanation about how the answer to the question is 'Yes' mentioning the paragraphs used in the context to answer it as 'Yes'. If the answer is 'No' or 'Unanswerable' only output that with NO description or elaboration. |
| Human Message: |
| Question: {question} |
| Research Paper Context: {paper chunks} |

As shown in Table 3, the answer can be 'yes', `no' or unanswerable along with an explanation. If all the papers answer either `no' or 'unanswerable' for all the questions generated to validate the motivation, it indicates that the existing literature is not addressing the motivation behind the research proposal and hence this phase is ended with a comment shown to the researcher that the motivation of the proposal is validated. Otherwise, the question-research paper pairs with only 'yes' as an answer, along with explanation are shown to the researcher. The researcher is enabled by the system to edit this output in terms of removing papers which he doesn't agree to address the question based on the explanation provided. If the answers are hallucinated, this step enables the researcher to remove such papers. The second agent (interchangeably referred as mentor agent throughout the description) uses the paragraph chunks of each shortlisted paper, original research proposal document and description of a prior question addressing the motivation. The mentor agent extracts the limitations or gaps of each of the shortlisted papers which have been identified to be addressing the motivation of the research proposal document such that the gaps can help redefining the problem in the research proposal document. Table 4 below shows a prompt for extraction of gaps of shortlisted papers.

**Table 4**

| Extract Limitation Prompt |
|---|
| System Message: |
| You are a researcher. You have been given the following research proposal document: { research proposal document} |
| A different research paper provided in the context already addresses the gap mentioned as the motivation behind the proposal. {descriptions} |
| Human Message: |
| Research Paper: {paper paragraph chunks} |
| Identify the limitations or gaps of this research paper which can serve as the new motivation for the research proposal document. Provide a bulleted list of limitations, where each bullet is concise. Answer WITHOUT a heading line and just the bullet points. |

The extracted gaps are shown to the researcher who can ignore the gaps found to be irrelevant and select some of the gaps that address part of the research problem. If the researcher does not agree with any of the specified research gaps, the system enables them to add their own set of research gaps. The mentor agent uses these gaps along with the original research proposal document to re-formulate the motivation and the research problem statement of the research proposal document to address new research gaps. Table 5 below shows a prompt for re-formulating the motivation and the research problem statement of the research proposal document to obtain an initial modified research proposal document.

**Table 5**

| Re-write Research Proposal Prompt |
|---|
| System Message: |
| You are a researcher and have written a research proposal document: {research proposal document} |
| Human Message: |
| Re-write the research proposal document by taking into consideration the mentioned gaps in the current literature as the new motivation behind of the problem defined in the research proposal document. Answer in a Single detailed paragraph WITHOUT any bullet points or list. Gaps in the current literature: {limitations} |

The system enables the researcher to edit the initial modified proposal for finalization or reject the edits to go back to prior research proposal document. The motivation validation workflow is applied to the research proposal document in an iterative manner. This means that the motivation behind the resultant updated research proposal document can be again validated by initiating the same workflow. This can be executed in an iterative fashion, until there are no scientific articles retrieved to be addressing the motivation behind the proposal, validating the novelty of the research proposal document.

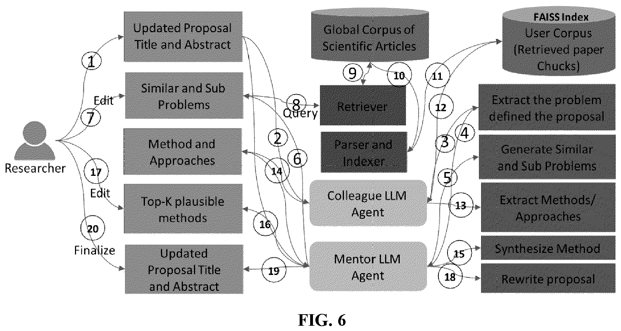

FIG. 6 illustrates an exemplary flow diagram illustrating the method synthesis workflow for ideation of research proposal using large language models agent-based architecture, in accordance with some embodiments of the present disclosure. As shown in FIG. 6, the method synthesis workflow begins with the initial modified research proposal document whose motivation is validated based on reviewing the literature and accepted by the researcher. The colleague agent takes the initial modified research proposal document as an input. The colleague agent extracts the research problem defined in the initial modified research proposal document. Table 6 below shows a prompt for extracting the research problem statement.

**Table 6**

| Research Problem Extraction Prompt |
|---|
| System Message: |
| You are a researcher and trying to understand the following research proposal document written by another researcher: {research proposal document} |
| Human Message: |
| What is the problem solved in the research proposal document? |

The mentor agent receives this research problem as an input and uses its parametric knowledge to generate a plausible set-of similar research problems. Table 7 below shows a prompt for generating the plausible set-of similar research problems.

**Table 7**

| Similar Problem Generation Prompt |
|---|
| System Message: |
| You are a researcher and trying to understand the following research proposal document written by another researcher: { research proposal document} |
| Human Message: |
| What is the research problem solved in the research proposal document? |
| AI Message: |
| {research problem statement} |
| Human Message: |
| Give me a bulleted list of a more generalized or similar problems to the research problem defined in the research proposal document l. Don't give a heading just the answer in a bulleted list. |

For example, if the problem defined in research proposal document is *'To design a reference-free evaluation metric for question answering task'.* A similar problem can be *'To come up with an evaluation metric for text summarization which can have multiple possible reference summaries'.* The mentor agent also uses its parametric knowledge to decompose the research problem defined in the research proposal document into sub-tasks or sub-problems (if any). Table 8 below shows a prompt for generating the sub-problems.

**Table 8**

| Sub Problem Generation Prompt |
|---|
| System Message: |
| You are a researcher and trying to understand the following proposal written by another researcher: {research proposal document} |
| Human Message: What is the problem solved in the research proposal document? |
| AI Message: {research problem statement} |
| Human Message: Provide a bulleted list of sub-problems or sub-tasks involved to solve the research problem. Don't give a heading just the answer in a bulleted list. |

For example, the research problem of *'question answering over scientific papers'* can be decomposed into *'extraction of text from PDF document of the scientific paper', 'segmenting the paper and storing it for efficient retrieval', 'retrieval of paragraphs from the paper related to the question', 'answering the question using the retrieved paragraphs as context', 'evaluating the retrieved paragraphs'* and *'evaluating the answers'.* The generated similar and sub-problems are shown to the researcher. The system enables researcher to edit the sub-problems by removing the ones found to be irrelevant, updating them or adding missing ones. This helps in removing the problems hallucinated by the mentor agent. Each of the edited similar problem or sub-problem is used as a query to retrieve scientific articles from the global corpus which address those respective sub-problems. The retrieved scientific articles are parsed and chunked into paragraphs ( i.e., relevant text) which are further stored in the user corpus.

**Table 9**

| Similar and Sub Problem Question Creation Prompt |
|---|
| Human Message: |
| { statement} |
| For the statement given above generate a question to be posed on a research paper to find out if the paper is proposing an approach or method to perform the task defined by the statement. Start the question with: 'Is the research paper proposing an approach or method to'. |

As shown in Table 9, for each retrieved paper, the colleague agent extracts the relevant text or relevant paragraphs which discuss about a method or approach taken by the retrieved paper to solve the respective sub-problem and generates a consolidated list of similar or sub problem and solution pairs. This consolidated list is showcased to the researcher who is enabled by the system to edit the consolidated list

**Table 10**

| Methodology Extraction Prompt |
|---|
| System Message: |
| You are a researcher and trying to answer the question posed on a research paper provided as the context. |
| Research Paper: {paper paragraph chunks} |
| Human Message: |
| Answer the given Question in 'Yes' OR 'No' OR 'Unanswerable'. Answer solely based on the provided context of the research paper. If the question cannot be answered with the facts mentioned in the available context or there is any ambiguity in answering the question, answer as 'Unanswerable'. Answer as 'Yes' only when the question can be very clearly answered considering the facts in the research paper provided in the context. Do not repeat the question as the part of the answer. If the answer to the question is 'Yes', provide detailed approach or methodology to |
| perform the task. If the answer is 'No' or 'Unanswerable' only output that with NO description. |
| Question: {question} |

As shown in Tables 9 and 10, the extracted problem of the research proposal document along with the consolidated list of similar problem or sub problems and their corresponding solutions in the literature is provided to the mentor agent. The mentor agent uses this information along with its' parametric knowledge to synthesize a list of plausible methods to solve the problem defined in the research proposal document. Table 11 below shows a prompt for Method Synthesis.

**Table 11**

| Method Synthesis Prompt |
|---|
| System Message: |
| You are a researcher and have been given a research proposal document and the research problem the research proposal document is trying to solve. You have been given the approaches in the literature trying to solve, similar problems and sub problems or sub tasks of the problem defined in the research proposal document. Your task is to synthesize and propose a possible set of methods or approaches to solve the research problem defined in the research proposal document. research proposal document: { research proposal document} |
| Research Problem in the research proposal document: { research problem} |
| Human Message: |
| {method context} |
| Based on the above information suggest the top 3 possible methods or approaches to solve the problem defined in the proposal. |

A list of plausible methods is shown to the researcher. The researcher is enabled by the system to choose a subset of these methods which they deem most plausible and these can be further edited, if needed. The updated list is provided to the mentor agent along with the original research proposal document. The mentor agent re-writes the research proposal document including these methods. This updated research proposal document is a final modified research proposal document which is shown to the researcher. The researcher is enabled by the system to further edit the updated research proposal document and finalize the same.

In an embodiment, hallucination is one of the major difficulties of using LLMs for knowledge based task. In the present disclosure, the set of hallucinated problems are eliminated using a two-fold solution: (i) There are retrieval augmented components of the workflows, where the motivation validation workflow poses questions generated to validate the motivation of the research proposal document on the retrieved articles stored in the user corpus or extract limitations of the articles which address the motivation of the research proposal document or the method synthesis workflow extracts approaches used to solve similar or sub problems from the retrieved articles. For these retrieval augmented tasks through proper prompt engineering, it is ensured that the answers are provided by restricting the knowledge to the retrieved context only. It is observed that this helps to mitigate hallucinations. (ii) There are components of the workflows which rely on parametric knowledge of LLMs, for example the motivation validation involves re-writing the research proposal document and the method synthesis involves generating similar sub problems for the research problem defined in the research proposal document proposal and synthesizing methods. For these tasks, the output cannot be restricted to the provided input. In such cases, there is a higher chance of hallucinated outputs. For such scenarios, mitigation of hallucinated outputs is ensured by enabling the system to allow user-interactions at every step to edit or delete hallucinated outputs. Moreover at every stage of the workflow, the LLM agents are asked to justify their outputs and the provided justification is exposed to the researcher through the interface. This forces the system to apply chain-of-thoughts and allows the researcher to validate the output and check if it is in sync with the justification provided. This assists in alleviating the effect of hallucinations.

In an embodiment, relevant outcomes are ensured using two-stage aspect based retrieval in the present disclosure. The global corpus contains a large number of scientific articles stored with the Specter embedding of the title and abstract of the papers. The title and abstract of the papers contains information about motivation and problem statement of the papers and a high-level description of the methodology and results. For ideation, more in-depth information from the papers is required across various aspects such as methodology, limitations, and/or the like. This is achieved by performing retrieval in two stages. In motivation validation workflow, the plurality of top-K papers are retrieved from the global corpus with the research proposal document as the query and high value of *K* is used for good recall. This helps to obtain a set-of papers with similar motivation and problem statement to that of the research proposal document. These papers are chunked and stored in the user corpus for further aspect based retrieval, such as papers with similar motivation to that of the research proposal document and paper paragraphs mentioning the research gaps of these papers. In method synthesis workflow, at first top-K papers from the global corpus are retrieved with similar sub problem statements as the query and high value of *K* is used for good recall. This helps to obtain a set-of papers with problems similar to the problem described in the research proposal document or similar to any of the sub-tasks or sub-problems of the research problem described in the research proposal document. These papers are chunked and stored in the user corpus for further aspect based retrieval such as extracting the approaches of the papers. Using high-recall value ensures coverage of papers for the first stage of retrieval and more precise outcomes for aspect based retrieval in the second stage.

In an embodiment, the present disclosure addresses the issue of unasnwerability. The output of aspect based retrieval is always top-K paragraphs from the retrieved and chunked papers. The value of K id kept low to get more precise retrieval for a given aspect based query. However, there is a possibility that the retrieved paragraphs do not have the answer to the query (i.e. the query is unanswerable). For example, in the motivation validation workflow, the retrieved paragraphs from the papers do not answer the question of whether the paper addresses a specific motivation of the research proposal document and does not specify the limitations of the paper which would help to refine the research problem defined in the research proposal document. Similarly, for the method synthesis workflow, the retrieved paragraphs may not have an approach to solve a similar problem. In such cases, the LLM based agents check the relevancy of retrieved paragraphs for the given query and identifies the query as 'unanswerable' in case if all the retrieved paragraphs are irrelevant, avoiding irrelevant outputs. Allowing unasnwerability also assists in reduction of hallucinations.

### Qualitative Analysis of the Workflows:

In the present disclosure, a qualitative analysis of the workflows is provided using multiple (e.g., three) research proposal documents received from distinct researchers, specifically in the domain of Artificial Intelligence (AI), Machine Learning (ML) and Natural Language Processing (NLP). The topics of these research proposal documents are: (i) datasets for computational study of peer reviews, (ii) topic-based citation retrieval for research proposal and (iii) reference-free evaluation metric for retrieval augmented question answering. These researchers have been working on distinct research problems, for which they intend to write research proposal documents. In the present disclosure, semantic scholar data fetched using a known Semantic Scholar Open Research Corpus (S2ORC) dataset is used as the global repository, which comprises a variety of papers in the AI, ML and NLP domain. A logging functionality of the system of the present disclosure is utilized to keep track of the interactions between the researcher and the LLM agents and observations described in the following paragraphs are derived.

The abstract of a first research proposal document with topic '*Dataset for Computational Study of Peer Reviews'* is: *'Peer review constitutes a core component of scholarly publishing and demands substantial expertise and training, and is susceptible to errors and biases. Various applications of natural language processing (NLP) for peer reviewing assistance aim to support reviewers in this complex process, but the lack of clearly licensed datasets and multidomain corpora prevent the systematic study of NLP for peer review. To remedy this, the system 100 and the method are configured to introduce an ethically sourced multi-domain corpus of papers and review reports from five different venues'.* With the topic and abstract of the first research proposal document as an input, the motivation validation workflow generates the question: *'Is the research paper addressing the lack of clearly licensed datasets for studying natural language processing for peer review?* As a part of this workflow, to validate the motivation of the first research proposal document, the colleague (LLM) agent posed this question on the paragraph chunks of top-50 scientific articles, retrieved to be similar to the topic and abstract of the research proposal document and stored in the user corpus. Out of these 50 scientific articles, 5 articles were retrieved with 'yes' as an answer, out of which the researcher agreed to the justification provided for four and disagrees with the justification of one. Following are the 4 research articles with a valid justification:
(i) NLPeer: A Unified Resource for the Computational Study of Peer Review
(ii) A Dataset of Peer Reviews (PeerRead): Collection, Insights and NLP Applications
(iii) Investigating Fairness Disparities in Peer Review: A Language Model Enhanced Approach
(iv) MOPRD: A multidisciplinary open peer review dataset.

Although, the article with title *'What Can We Do to Improve Peer Review in NLP?'* agrees with the motivation of the first research proposal document, however, does not address the same. As next part of the motivation validation workflow, the colleague agent extracts the following research gaps from the identified 4 research articles:
(i) NLPeer: A Unified Resource for the Computational Study of Peer Review, the identified research gaps are:
   (a) The paper does not contain blind reviewing data which is a standard practice in most research fields,
   (b) The paper does not perform extensive hyper parameter search and tuning of the models, which could limit the effectiveness of the models,
   (c) The paper acknowledges the risk of "lazy reading" where reviewers might only read the paragraphs suggested by the model, but does not provide a solution to prevent this.
(ii) A Dataset of Peer Reviews (PeerRead): Collection, Insights and NLP Applications, the identified research gaps are:
   (a) The models used in the research are relatively simple, which may limit their effectiveness in complex peer review scenarios,
   (b) The paper leave room for further research in areas such as demographic biases in accept/reject decisions,
   (c) The research does not provide a multidomain corpus of papers and review reports from different venues, limiting the scope of its application.
(iii) Investigating Fairness Disparities in Peer Review, A Language Model Enhanced Approach, the identified research gaps are:
   (a) The research paper does not draw any causal conclusions from the fairness analysis, limiting the depth of understanding about the underlying mechanisms of bias in peer review,
   (b) The research paper does not investigate the effect of rebuttals in the peer review process, which could be a significant factor in the final decision on a paper,
   (c) The research paper does not provide a thorough analysis of the continual learning problem in Pretrained Language Models (PLMs), which could be crucial for improving automatic review generation.
(iv) MOPRD: A multidisciplinary open peer review dataset, the identified research gaps are:
   (a) The research paper acknowledges that the multidisciplinary bias of their method could be a concern, indicating a need for more balanced datasets across various disciplines,
   (b) The paper points out that the input limits still exist as the maximum length of the input text only reaches 16,384 tokens, indicating a need for models that can handle larger input sizes,
   (c) The paper mentions that the performance of attention mechanisms will be compromised as the input length increases, indicating a need for more efficient attention mechanisms or alternative models for handling long input sequences.

This showcases the quality of outputs provided by the motivation workflow in terms of identifying the research gaps in the existing articles, partially eliminating the need of detailed literature survey of these articles to find gaps and thus alleviating research efforts.

In the present disclosure, it is further observed that the researcher selects a subset of the identified research gaps, they find to be relevant. The mentor agent further uses these selected gaps to the first research proposal document. The updated research proposal provided as an outcome of the motivation workflow taking into account the selected research gaps is: '*The current literature presents several gaps that motivate the need for a more comprehensive approach to the application of Natural Language Processing (NLP) in peer review. The absence of blind reviewing data, a standard practice in most research fields is a significant limitation. The lack of a multidomain corpus of papers and review reports from different venues restricts the scope of its application. The difficulty of studying the review process compared to the decision process, the unexplored effect of rebuttals in the peer review process indicate a need for more sophisticated methods or tools. The multidisciplinary bias of the method, the input limits of Language Models, and the compromised performance of attention mechanisms as the input length increases, all suggest a need for improved NLP models for peer review, more balanced datasets across various disciplines, and models that can handle larger input sizes and long input sequences. To address these gaps, we propose to introduce an ethically sourced multidomain corpus of papers and review reports from five different venues'.* From the above mentioned research proposal, the mentor agent takes into consideration following selected research gaps and introduces them in the updated version of the research proposal:
(i) availability of multi-disciplinary, multi-venue, blind-review corpus,
(ii) no studies of effect of rebuttals
(iii) context limits of language models (LMs) to tackle long reviews of existing work in this domain.

It is observed that the researcher makes a very few edits to the updated research proposal abstract and accepts the same. The total time required for validating the motivation and updating the research proposal abstract accordingly is substantially (~5x for the above mentioned research proposal) reduced by this motivation workflow.

In an embodiment, an input from another researcher is received with a second research proposal document titled *'Topic-based citation retrieval for research proposal'* and the corresponding abstract *'Retrieval of research articles pertinent to a given query represents a thoroughly investigated research challenge. Typically, queries take the form of a title and abstract of a research article, or a specific sentence or paragraph from an existing research article requiring citation. However, existing approaches presuppose the availability of a well-constructed manuscript, an assumption that is inappropriate during the initial research proposal writing stage. At this initial phase, researchers seek pertinent literature for citing in their proposals, often focusing on specific topics or intents and further build the proposal. In this work, we aim to tackle the issue of topic-based citation retrieval for research proposals. We anticipate researchers providing the title and abstract of their research proposals, encompassing elements such as the research gap, problem statement, and a high-level overview of the proposed methodology and experiments. Additionally, researchers will furnish a list of topics for which relevant scientific articles need to be retrieved. Our proposed algorithm intends not only to fetch research articles pertinent to the given proposal from a corpus, but also to establish a crucial many-to-many mapping between these articles and the specified topics.* ' The colleague agent generates the following questions for validation of the motivation:
1. Is the research paper specifically addressing the retrieval of re- search articles relevant to a topic of a research proposal? and
2. Is the research paper developing a technique to map research articles to specified topics in research proposals?.

Out of top-50 research articles used to validate the motivation of the second research proposal document by posing the above mentioned questions, following four scientific article got retrieved to be answering as 'yes' to at the least one of the above questions and thus invalidating the motivation behind the second research proposal document:
1. Citation Recommendation: Approaches and Datasets
2. CitationIE: Leveraging the Citation Graph for Scientific Information Extraction
3. Content-Based Citation Recommendation and
4. unarXive 2022: All arXiv Publications Pre-Processed for NLP, Including Structured Full-Text and Citation Network.

However, the justifications provided for these research papers highlight that first and third scientific article introduce an approach for citation recommendations during writing phase of target manuscripts and not at research proposal writing stage. Also, second scientific article leverages content of a target paper and citation graph to extract scientific information. The outcome of the fourth scientific article is a dataset which can be useful for the second research proposal document, but does not address the task of `topic-based citation retrieval for research proposal'. Thus, it is observed that after evaluating the retrieved scientific articles claimed to be invalidating the second research proposal document, the researcher disagrees with the justifications provided for each of the retrieved articles for addressing the motivation behind the second research proposal document. Hence novelty of the second research proposal document is validated. This exemplifies the need as well as the effectiveness of the user interaction facility provided by the system for the motivation workflow. Generally, the researcher manually go through multiple relevant research articles retrieved by generic or academic search engines to ensure that the literature does not have a solution for the specific problem the researcher is trying to address. This leads to a time consuming process. This example demonstrates acceleration of motivation validation stage of the research-life cycle (~8x for the second research proposal document) by eliminating the need for the researcher to manually go through multiple relevant research articles retrieved by generic or academic search engines.

In an embodiment, an input from another researcher is received with a third research proposal document titled *'Reference-Free evaluation metric for Retrieval augmented question answering task'* and the abstract *'We observe that questions with long answers on long documents do not have unique reference evidences (relevant paragraphs from the document) and answers. Rather, there is a distribution over reference answers, making expert based evaluation expensive and existing unique reference-based evaluation metrics inadequate. We also do not find any reference-free evaluation metric designed for evaluating retrieval augmented question answering task. Hence, this this work we propose to define this metric'.* The colleague agent generates the following question to validate the motivation of the third research proposal document:
*Is the research paper proposing a reference-free evaluation metric designed for evaluating retrieval augmented question answering tasks?*

It is observed that out of top-50 retrieved scientific articles relevant to the third research proposal document, none of the scientific articles provides answer as 'yes' to the above generated question, leading to retrieval of no paper which invalidates the motivation of the third research proposal document. Manual analysis of the top-50 retrieved articles as well as other relevant articles performed by the researcher to evaluate the outcome of the motivation workflow, substantiates the results.

For the method synthesis workflow for the third research proposal document, the mentor agent generates following set of research problems similar to the research problem defined in the third research proposal document:
1. Evaluating complex tasks where there is no unique correct answer or reference.
2. Designing evaluation metrics for tasks that involve retrieval and interpretation of large amounts of data.
3. Creating reference-free evaluation metrics for tasks where reference-based metrics are inadequate or impractical.
4. Assessing the quality of answers in tasks where the answers can be long and drawn from extensive documents.

The mentor agent also generates the following sub-tasks or sub-problems for the research problem defined in the third research proposal document:
1. Defining a new metric that can effectively evaluate retrieval augmented question answering tasks, and
2. Overcoming the inadequacy of existing unique reference-based evaluation metrics for questions with long answers on long documents.

With the above mentioned sub-problems as queries, the colleague agent first retrieves Top-10 similar scientific articles per statement which means total 40 articles with some overlap as same article may be retrieved for multiple queries. Further, the colleague agent poses the question *'if the article provides a methodology of an approach to solve the above defined set of sub-problems of sub-tasks'.* The researcher receives total 17 scientific articles which answers 'yes' to the question along with a description of the methodology implemented for each of the above defined set of sub-problems or sub-tasks. Out of these scientific articles, the researcher accepts the following 11 scientific articles, finding them to be more relevant to the research problem:
1. AVA: an Automatic evaluation Approach to Question Answering Systems.
2. Evaluation: from precision, recall and F-measure to ROC, informedness, markedness and correlation.
3. Re-visiting Automated Topic Model Evaluation with Large Language Models.
4. SacreROUGE: An Open-Source Library for Using and Developing Summarization Evaluation Metrics.
5. Quantified Reproducibility Assessment of NLP Results.
6. Revisiting the Gold Standard: Grounding Summarization Evaluation with Robust Human Evaluation.
7. A Critical Evaluation of Evaluations for Long-form Question Answering.
8. Think you have Solved Direct-Answer Question Answering? Try ARC-DA, the Direct-Answer AI2 Reasoning Challenge.
9. More Than Reading Comprehension: A Survey on Datasets and Metrics of Textual Question Answering.
10. Hurdles to Progress in Long-form Question Answering.
11. A Critical Evaluation of Evaluations for Long-form Question Answering.

Based on approaches discussed in the above scientific articles to solve the above enlisted similar sub-problems and/or sub-tasks, the mentor agent suggests the following 10 plausible methodologies for the third research proposal document. These suggested 10 plausible methodologies with the exact verbatim provided by the mentor agent are as follows:
1. AVA (Automatic Evaluation Approach): This approach uses Transformer-based language models to encode the question, answer, and reference text. By measuring the similarity between the reference and an automatic answer, biased towards the question semantics, AVA can estimate system accuracy. This approach can be used to evaluate retrieval augmented question answering tasks and overcome inadequacy of existing unique reference-based evaluation metrics.
2. Informedness and Markedness Measures: These new probabilistic and information theoretic measures can be used to evaluate complex tasks where there is no unique correct answer or reference. They can also be used to design evaluation metrics for tasks that involve retrieval and interpretation of large amounts of data.
3. Large Language Models (LLMs): LLMs can be used as automated metrics for evaluating tasks that involve retrieval and interpretation of large amounts of data. They can also be used to assess the quality of answers in tasks where the answers can be long and drawn from extensive documents.
4. SacreROUGE: This open-source library dedicated to development of summarization evaluation metrics can be used to develop reference-free evaluation metrics for tasks where reference-based metrics are inadequate or impractical.
5. Quantified Reproducibility Assessment (QRA): This method, based on concepts and definitions from metrology, can be used to develop reference-free evaluation metrics for tasks where reference-based metrics are inadequate or impractical.
6. RoSE Benchmark: This benchmark can be used to provide a more robust evaluation across different tasks. It can also be used to develop reference-free evaluation metrics for tasks where reference-based metrics are inadequate or impractical.
7. GENIE6: This human-in-the loop leaderboard framework can be used to score answers in tasks where the answers can be long and drawn from extensive documents.
8. Sparse Attention and Contrastive Retriever Learning: This system conditions answer generation on identified documents and uses a dense retriever trained by scaling up a distantly supervised algorithm. It can be used to overcome the inadequacy of existing unique reference-based evaluation metrics for questions with long answers on long documents.
9. Unified Evaluation Benchmark for Long-form Answers: This approach involves conducting a thorough study of evaluation, including both human and automatic evaluation protocols. It can be used to overcome the inadequacy of existing unique reference-based evaluation metrics for questions with long answers on long documents.
10. Training a Long-Form Question Answering (LFQA) Evaluation Metric Directly on Human-Annotated Preference Judgments: This approach involves fine-tuning pre-trained Language Models based on human judgement scores for the task. This output showcases the quality of method recommendations provided by the system of the present disclosure for a given research proposal document.

Though mentioned at high-level, the researcher agreed that most of the above-mentioned methods are well-suited as a plausible approach for the third research proposal document. Though there is a need for further work to finalize the most appropriate plausible method for the third research proposal document, the researcher found out that this first cut of output provided by the system of the present disclosure was relevant and overall process to be ~10 times more efficient than regular process followed by the researcher for constructing a plausible set-of approaches for a given research problem, by searching through the relevant literature from scratch.

These examples illustrating the outcomes of the motivation validation and method synthesis phases of the ideation workflow of the system of the present disclosure demonstrates the efficacy of the system of the present disclosure, in terms of providing relevant outputs at each stage of the workflow. The observations made in terms of time saved by the researchers with the system usage for the respective tasks demonstrates the power of the system of the present disclosure with regards to time efficiency gain.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

Embodiments of the present disclosure provides a system developed to accelerate the ideation phase of the research life cycle. To emulate the ideation process, the large language models (LLM) agent-based architecture is used with colleague and mentor personas to execute a motivation validation and method synthesis, which engage users in an interactive fashion to develop a research proposal document. The present disclosure (i) alleviates hallucinations of LLMs, (ii) ensure relevant outcomes using two-stage aspect based retrieval, where first stage introduces higher recall reducing False Negatives and False Positives are corrected by user interaction, and second stage provides more precise fine-grained aspect-based retrieval, and (iii) introduction of unanswerability. The present disclosure demonstrates precise outcomes with ~7.5x gains in time efficiency for various stages of the ideation phase.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising steps of:
receiving (202), via an input/output interface, a research proposal document as an input from a user, wherein the research proposal document comprises text depicting a high-level description of a research problem and a motivation behind the research problem;
inputting (204), via one or more hardware processors, the research proposal document as a query to a large language models (LLM) agent-based architecture, wherein the LLM agent-based architecture comprises a first agent and a second agent interacting with each other and the user, a first data repository, and a second data repository;
enabling (206), via the one or more hardware processors, the first agent to perform a first of type of tasks and the second agent to perform a second type of tasks on the query using the LLM agent-based architecture; and
obtaining (208), via the one or more hardware processors, a modified research proposal document with a validated motivation and a set of plausible solutions addressing the research problem based on the first type of tasks performed by the first agent and the second type of tasks performed by the second agent, wherein the validated motivation is iteratively updated based on a plurality of gaps identified in a plurality of prior research documents addressing the motivation behind the research problem.

2. The processor implemented method (200) as claimed in claim 1, wherein the first type of tasks performed by the first agent comprises at least one of: (i) extracting relevant information from the research proposal document, (ii) generating a plurality of relevant questions from the relevant information, (iii) retrieving a plurality of top-K research documents from the first repository having a similarity to the research proposal document using a vector representation of the research proposal document, and (iv) obtaining a plurality of paragraph chunks of each of the plurality of top-K research documents from the second repository that are created using a parser and indexer functionality of the LLM agent-based architecture.

3. The processor implemented method (200) as claimed in claim 1, wherein the second type of tasks performed by the second agent comprises at least one of (i) identifying a plurality of gaps in the plurality of prior research documents addressing the motivation behind the research problem, (ii) identifying the set of plausible solutions addressing the research problem, and (iii) re-writing the research proposal document based on the plurality of gaps identified in a plurality of prior research documents and the set of plausible solutions addressing the research problem.

4. The processor implemented method (200) as claimed in claim 1, wherein the set of plausible solutions addressing the research problem is identified by:
decomposing the research problem defined in the research proposal document into a plurality of sub-problems;
identifying a subset of sub-problems from the plurality of sub-problems such that a set of hallucinated problems are eliminated;
retrieving a plurality of top-K research documents from the first repository having a similarity to each of the subset of sub-problems based on a vector representation of the subset of sub-problems;
determining a set of plausible solutions for addressing each subproblem from the subset of sub-problems by extracting one or more relevant texts from each of the plurality of top-K research documents stored and retrieved from the second repository;
iteratively performing step of retrieving the plurality of top-K research documents and identifying the set of plausible solutions to generate a consolidated list of a subset of similar sub-problems and corresponding set of plausible solutions; and
identifying the set of plausible solutions addressing the research problem using the consolidated list of the subset of similar sub-problems and the corresponding set of plausible solutions.

5. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a research proposal document as an input from a user, wherein the research proposal document comprises text depicting a high-level description of a research problem and a motivation behind the research problem;
input the research proposal document as a query to a large language models (LLM) agent-based architecture, wherein the LLM agent-based architecture comprises a first agent and a second agent interacting with each other and the user, a first data repository, and a second data repository;
enable the first agent to perform a first of type of tasks and the second agent to perform a second type of tasks on the query using the LLM agent-based architecture; and
obtain a modified research proposal document with a validated motivation and a set of plausible solutions addressing the research problem based on the first type of tasks performed by the first agent and the second type of tasks performed by the second agent, wherein the validated motivation is iteratively updated based on a plurality of gaps identified in a plurality of prior research documents addressing the motivation behind the research problem.

6. The system as claimed in claim 5, wherein the first type of tasks performed by the first agent comprises at least one of: (i) extracting relevant information from the research proposal document, (ii) generating a plurality of relevant questions from the relevant information, (iii) retrieving a plurality of top-K research documents from the first repository having a similarity to the research proposal document using a vector representation of the research proposal document, and (iv) obtaining a plurality of paragraph chunks of each of the plurality of top-K research documents from the second repository that are created using a parser and indexer functionality of the LLM agent-based architecture.

7. The system as claimed in claim 5, wherein the second type of tasks performed by the second agent comprises at least one of (i) identifying a plurality of gaps in the plurality of prior research documents addressing the motivation behind the research problem, (ii) identifying the set of plausible solutions addressing the research problem, and (iii) re-writing the research proposal document based on the plurality of gaps identified in a plurality of prior research documents and the set of plausible solutions addressing the research problem.

8. The system as claimed in claim 5, wherein the set of plausible solutions addressing the research problem is identified by:
decomposing the research problem defined in the research proposal document into a plurality of sub-problems;
identifying a subset of sub-problems from the plurality of sub-problems such that a set of hallucinated problems are eliminated;
retrieving a plurality of top-K research documents from the first repository having a similarity to each of the subset of sub-problems based on a vector representation of the subset of sub-problems;
determining a set of plausible solutions for addressing each subproblem from the subset of sub-problems by extracting one or more relevant texts from each of the plurality of top-K research documents stored and retrieved from the second repository;
iteratively performing step of retrieving the plurality of top-K research documents and identifying the set of plausible solutions to generate a consolidated list of a subset of similar sub-problems and corresponding set of plausible solutions; and
identifying the set of plausible solutions addressing the research problem using the consolidated list of the subset of similar sub-problems and the corresponding set of plausible solutions.

9. One or more non-transitory machine-readable information storage mediums comprising one or more instructions which when executed by one or more hardware processors cause:
receiving a research proposal document as an input from a user, wherein the research proposal document comprises text depicting a high-level description of a research problem and a motivation behind the research problem;
inputting the research proposal document as a query to a large language models (LLM) agent-based architecture, wherein the LLM agent-based architecture comprises a first agent and a second agent interacting with each other and the user, a first data repository, and a second data repository;
enabling the first agent to perform a first of type of tasks and the second agent to perform a second type of tasks on the query using the LLM agent-based architecture; and
obtaining a modified research proposal document with a validated motivation and a set of plausible solutions addressing the research problem based on the first type of tasks performed by the first agent and the second type of tasks performed by the second agent, wherein the validated motivation is iteratively updated based on a plurality of gaps identified in a plurality of prior research documents addressing the motivation behind the research problem.

10. The one or more non-transitory machine-readable information storage mediums as claimed in claim 9, wherein the first type of tasks performed by the first agent comprises at least one of: (i) extracting relevant information from the research proposal document, (ii) generating a plurality of relevant questions from the relevant information, (iii) retrieving a plurality of top-K research documents from the first repository having a similarity to the research proposal document using a vector representation of the research proposal document, and (iv) obtaining a plurality of paragraph chunks of each of the plurality of top-K research documents from the second repository that are created using a parser and indexer functionality of the LLM agent-based architecture.

11. The one or more non-transitory machine-readable information storage mediums as claimed in claim 9, wherein the second type of tasks performed by the second agent comprises at least one of (i) identifying a plurality of gaps in the plurality of prior research documents addressing the motivation behind the research problem, (ii) identifying the set of plausible solutions addressing the research problem, and (iii) re-writing the research proposal document based on the plurality of gaps identified in a plurality of prior research documents and the set of plausible solutions addressing the research problem.

12. The one or more non-transitory machine-readable information storage mediums as claimed in claim 9, wherein the set of plausible solutions addressing the research problem is identified by:
decomposing the research problem defined in the research proposal document into a plurality of sub-problems;
identifying a subset of sub-problems from the plurality of sub-problems such that a set of hallucinated problems are eliminated;
retrieving a plurality of top-K research documents from the first repository having a similarity to each of the subset of sub-problems based on a vector representation of the subset of sub-problems;
determining a set of plausible solutions for addressing each subproblem from the subset of sub-problems by extracting one or more relevant texts from each of the plurality of top-K research documents stored and retrieved from the second repository;
iteratively performing step of retrieving the plurality of top-K research documents and identifying the set of plausible solutions to generate a consolidated list of a subset of similar sub-problems and corresponding set of plausible solutions; and
identifying the set of plausible solutions addressing the research problem using the consolidated list of the subset of similar sub-problems and the corresponding set of plausible solutions.
